# EUROPEAN PATENT SPECIFICATION

(11) **EP 1 749 159 B1**
(45) Date of publication and mention of the grant of the patent: **26.09.2007**
(21) Application number: 04745151.3
(22) Date of filing: 19.05.2004
(51) Int. Cl.: F16H 55/36, F16H 55/38

(54) **IMPROVED PULLEY FOR A BELT DRIVE OF A VEHICLE**
VERBESSERTE RIEMENSCHEIBE FÜR EINEN RIEMENANTRIEB EINES FAHRZEUGS
POULIE AMELIOREE POUR TRANSMISSION PAR COURROIE POUR VEHICULE

(43) Date of publication of application: 07.02.2007
(73) Proprietor: Dayco Europe S.r.l. con Unico Socio, Frazione Chieti Scalo 66100 Chieti (IT)
(72) Inventor: DI MECO, Marco, I-65129 Pescara (IT); LICINI, Licinia, I-66026 Ortona (IT)
(74) Representative: Jorio, Paolo
(86) International application number: PCT/IT2004/000285
(87) International publication number: WO 2005/111469

(56) References cited:
- US-A- 2 176 335
- US-A- 4 421 498
- US-A- 4 960 476
- US-A1- 2004 014 540

## Description

### TECHNICAL FIELD

The present invention concerns an improved pulley for a belt drive of a vehicle, and a belt drive according to the preamble of claim 1 and 11.

### BACKGROUND ART

Generally, the accessories transmission of a motor vehicle includes a driving pulley rigidly connected to the driving shaft, a multiplicity of driven pulleys that drive respective accessories, among which an electric current generating machine, and a poli-V type drive belt wound around the pulleys to transmit the power necessary to drive the accessories.
In particular, US-4960476 discloses a conventional pulley for a poli-V drive belt according to the preamble of claim 1.

Recently so-called 'start-stop' systems have been adopted that allow the automatic switching off and restarting of the internal combustion engine while the vehicle is stationary therefore reducing the polluting exhaust emissions particularly in urban areas.

For this purpose it is expedient to use an electric machine, i.e. which is capable of functioning as a generator of current and therefore be driven by the engine, as well as functioning as a motor for starting the internal combustion engine.

In particular, the starting by means of the reversible electric machine proves difficult in wet conditions and the known art of increasing the winding angle around the conventional pulley of the reversible electric machine or of increasing the wedging between the belt and the conventional pulley guarantee a much less reliable starting procedure besides causing noise and wear and tear of the transmission.

### DISCLOSURE OF INVENTION

The purpose of the present invention is to realize an improved pulley without the drawbacks described above.

A pulley is realized according to the present invention, like that defined in claim 1.

### BRIEF DESCRIPTION OF THE DRAWINGS

For a better understanding of the present invention some preferred embodiments are now described, purely by way of nonlimiting example and with reference to the enclosed designs, in which:
- figure 1 is a frontal view of a belt drive including a pulley according to the present invention;
- figure 2 is a side view of a pulley according to the present invention;
- figure 3 is a partially cutaway frontal view of the pulley of figure 2;
- figure 4 is a section magnified according to the IV-IV line of figure 2 of a part.
- figure 5 is a partially cutaway side view of a pulley according to an additional embodiment of the present invention; and
- figure 6 is a section magnified according to the IV-IV line of figure 2 of a pulley according to a third embodiment of the present invention.

### BEST MODE FOR CARRYING OUT THE INVENTION

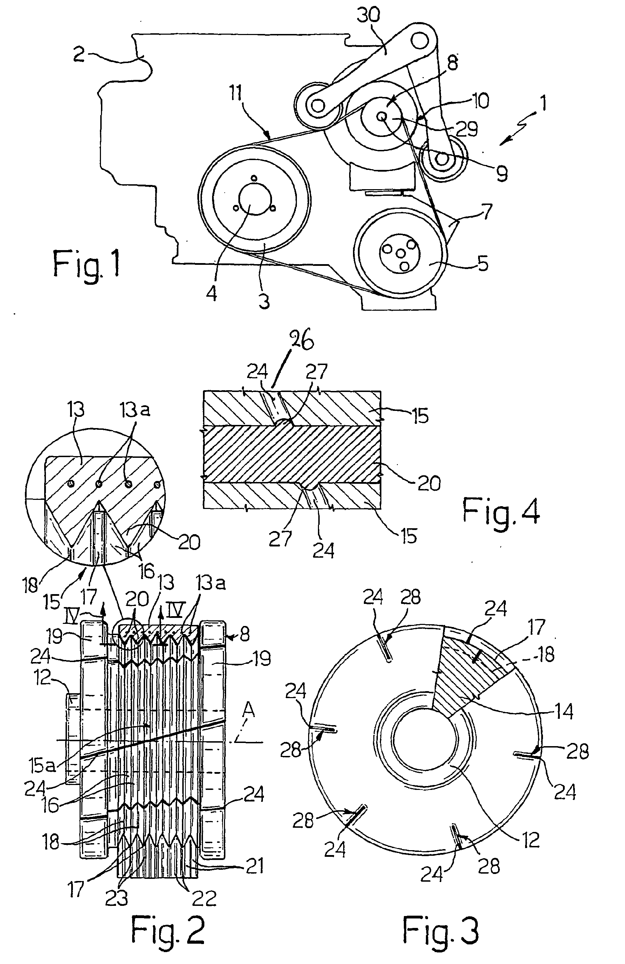

In figure 1 is denoted by 1, as a whole, an accessories transmission of an internal combustion engine 2 including a pulley 3 splined to a driving shaft 4 of the engine 2 and a driven pulley 5 able to drive a compressor 7 for an air conditioning unit.

The transmission 1 besides includes a pulley 8 rigidly connected to a rotating shaft 9 of a reversible electric machine 10, and a belt 11 of poli-V type including a body 13 of elastomeric material, wound around the pulley 3 and the pulleys 5 and 8 and kept taut by a twin-arm tensioner 30 to allow the transmission of power between the driving shaft 4, the compressor 7 and the reversible electric machine 10.

In particular, the body 13 is realized with a mixture for a back side, continuous polyester filiform stiffening elements 13a, and with a para-aramide felted mixture directly in contact with the pulleys 3, 5, 8.

The pulley 8 connected to the reversible electric machine 10 includes (figure 2) integrally a hub 12 splined to the shaft 9 having an axis A and a circular rim 14 integral with the hub 12.

The rim 14 includes a multiplicity of circular ribs 15 perpendicular to the axis A having a triangular radial section and each including one pair of flat sides 16 converging towards a radially peripheral crest 17 and joined to the respective sides 16 next to the neighbouring ribs 15 by means of a concave strip 18.

The ribs 15 therefore define a V-grooved surface 15a connected to the belt 11.

Besides, the ribs 15 are axially delimited by two edges 19 extending radially beyond the crests 17, and cooperate by friction with the back 13 of the belt 11 that is laterally guided by the edges 19 and has respective ribs 20 having sides 21, crests 22 and strips 23 functionally similar to those of the ribs 15 and having such dimensions so that contact occurs along the respective sides 16, 21 and between the crests 17 and the strips 23.

Besides, the rim 14 has six rectilinear grooves 24, circumferentially equidistant, which intersect at an angle of 30° as regards the axis A, the ribs 15 radially extending down below the strips 18 (figure 3) and thus defining a notch 26 both along the sides 26 as well as on the strips 18. In particular, the grooves 24 are parallel to each other and extend along the entire thickness of the rim 14 defining some evacuation ports 28 on respective faces 29 of the rim 14 disposed at opposite axial ends with respect to a median plane of the rim 14 perpendicular to the axis A. The operation of the pulley 8 is as follows.

When the belt 11 connects with the ribs 15 of the pulley 8, the respective sides 21 and 16 are in contact and the crests 22 of the belt 11 connect with the strips 18 of the pulley 8. Thanks to the tension maintained by the tensioner 30 and the pull of the transmission, the sides 16 and 21 are subjected to a contact pressure that tends to locally compress the elastomeric material of the belt 11. In this way, when a portion of the side 21 of a rib 20 of the belt 11 is facing a notch 26 it tends to expand elastically inside the same notch 26 causing the temporary formation of a transversal relief 27 (figure 4) that axially engages in the notch 26. Afterwards, when the portion of the side 21 disengages 11 from the pulley, the transversal relief 27 disappears thanks to the elastic recovery of the elastomeric material.

As a result, the motion is transferred in a hybrid way both through the friction between the respective flat portions of the sides 16 and 21 in contact with each other, as well as because of the engagement between the transversal reliefs 27 and the notches 26..

Therefore, during starting of the engine 2 in dry conditions the transfer of motion prevails through the friction of the sides 16 and 21, whereas during starting in wet conditions, the friction between the sides 16, 21 decreases and should the belt 11 show a tendency to slip however, it will be held by the transversal reliefs 27 that are engaged in the notches 26.

An examination of the characteristics of the pulley realized according to the present invention show the advantages that can be gained from it.

In particular, the engagement of the transversal reliefs 27 in the respective notches 26 improves the efficacy of the transfer of power between the belt 11 and the pulley 8, particularly in wet conditions. In fact since this method is unaffected by variations in the friction coefficient caused by the presence of water on the contact surfaces, it is possible to proportion and adapt the notches 26 and the relative grooves 24 so as to allow the transfer of the power necessary to start the engine.

Besides, the pulley 8 can connect with any type of poli-V belt since the formation of the transversal reliefs 27 inside the notches 26 is made possible thanks to the elasticity of the elastomeric material commonly used in the poli-V belts currently on the market.

The arrangement of the notches 26 along inclined courses as regards the axis A retains the elevated characteristic silence of transmissions which include a poli-V type belt.

Besides the presence of the evacuation ports 28 on the lateral faces allows the elimination of any excess moisture on the sides 16, 21 in contact.

Lastly it is clear that modifications and variations can be made to the system described herein, without leading away from the scope of the present invention, as defined in the enclosed claims.

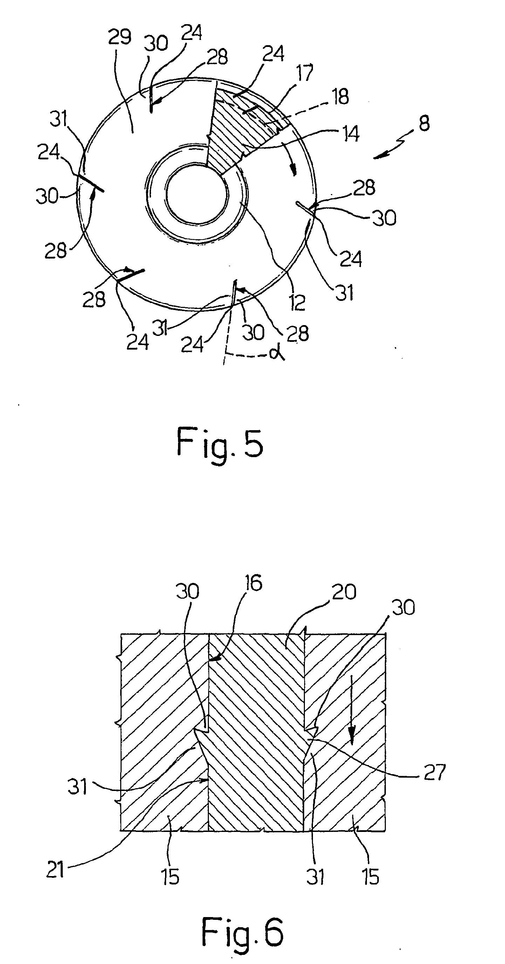

The grooves 24 can have both curvilinear as well as rectilinear courses being realized by a flat blade. In this case (figure 5), each groove 24 has a median plane α generally transversal both as regards the axis A as well as regards the tangent of each of the strips 18 crossed by the same groove 24.

In particular, when the median plane α is inclined in a direction facing the direction of movement of the pulley 8, each groove 24 is defined by a wedge portion 30 having an edge facing the direction of rotation of the pulley 8 and by a bevelled portion 31 of the rim 14 respectively facing said median plane α.

When the pulley 8 pulls the belt 11, the axial reliefs 27 interact mostly with the wedge portions 31 further improving the antislip effect.

Vice versa, when the belt 11 pulls the pulley 8, the axial reliefs 27 interact mostly with the bevelled portions 31 helping the release from the notches 26 and thus producing a basically unidirectional antislip system.

According to an additional embodiment, the notches 26 can be realized with different geometries, for instance they can be blind impressions.

Figure 6 shows a partial development of a circumferential section depicting a pair of blind notches 26 engaged by respective axial reliefs 27.

Also in this case, each notch 26 is defined by a wedge portion 30 and by a bevelled portion 31 of the ribs 15 and the operation is similar to that previously described. Besides, the sides 21 of the belt 11 can have raised fibres that constitute the drive of the felted mixture. The fibres engage in the notches 26 further increasing the efficacy of the torque transmission in wet conditions.

## Claims

1. Pulley (8) for a belt drive (1) of a vehicle including a hub (12) revolving around an axis (A) and able to be rigidly connected to a rotating shaft (9) of an accessory (10) cooperating with said belt drive, a rim (14) integral with said hub (12) and having a multiplicity of ribs (15) circumferentially perpendicular to said axis (A) and defining a V-grooved surface (15a) able to cooperate with a belt (11) of said belt drive (1), **characterised in that** said pulley has a multiplicity of notches (26) distributed circumferentially on lateral sides (16) of said ribs (15).

2. Pulley as claimed in claim 1, **characterized in that** said sides (16) of neighbouring ribs (15) are joined through respective concave strips (18) and that said notches (26) extend over said strips (18).

3. Pulley as claimed in one of the claims 1 or 2,
**characterized in that** said notches (26) are uniformly distributed.

4. Pulley as claimed in any one of the previous claims,
**characterized in that** said notches (26) follow courses disposed transversely as regards said ribs (15).

5. Pulley as claimed in claim 4, **characterized in that** said courses are rectilinear and oblique as regards said axis (A).

6. Pulley as claimed in any one of the previous claims,
**characterized in that** said notches (26) are realized by means of transversal grooves (24) each passing through said ribs (15).

7. Pulley as claimed in claim 6, **characterized in that** it includes faces (29) of axial ends and that said grooves (24) extend axially between said faces (29).

8. Pulley as claimed in any one of the claims from 1 to 5,
**characterized in that** said multiplicity of notches (26) is defined by a plurality of blind impressions.

9. Pulley as claimed in any one of the previous claims,
**characterized in that** said pulley (8) includes at least one wedge portion (30) and at least one bevelled portion (31) respectively facing and defining one of said notches (26).

10. Pulley as claimed in claim 9, **characterized in that** said at least one wedge portion (30) is facing in a direction of rotation of said pulley (8).

11. Belt drive (1) including at least one first and one second pulley (3, 8) rigidly connected to respective rotating shafts (4, 9) and respectively including a multiplicity of radially peripheral circumferential ribs (15) and a belt (11) wound under tension between said first and second pulley (3, 8) and including a body (13) of elastomeric material connected to a V-grooved surface (15a) defined by said multiplicity of ribs (15), **characterized in that** said second pulley (8) has a multiplicity of notches (26) distributed circumferentially on the lateral sides (16) of said ribs (15) and housing respective reliefs (27) of a portion said body (13) in contact with said ribs (15) said reliefs (27) being elastically expanded inside said notches (26) due to the effect of the tension of said belt (11).

12. Belt drive as claimed in claim 11, **characterized in that** said belt (11) includes a body (13) having a felted mixture in contact with said second pulley (8).

## Patentansprüche

1. Riemenscheibe (8) für einen Riemenseheibenantrieb (1) eines Fahrzeugs, umfassendeine um eine Achse (A) herum drehbare Nabe (12) und die fest verbunden sein kann mit einer rotierenden Welle (9) eines Zubehörs (10), das mit dem Riemenscheibenantrieb (1) zusammenwirkt, einen integral an der Nabe (12) ausgebildeten Radkranz (14) und der eine Vielzahl von Rippen (15) aufweist, die senkrecht zur Achse (A) umlaufen und die eine V-förmig gerillte Oberfläche (15a) definieren, die zusammenwirken kann mit einem Riemen (11) des Riemenscheibenantriebes (1), **dadurch gekennzeichnet, dass** die Riemenscheibe (8) eine Vielzahl von Kerben (26) aufweist, die umlaufend auf seitlichen. Flächen (16) der Rippen (15) verteilt sind.

2. Riemenscheibe, wie beansprucht in Anspruch 1, **dadurch gekennzeichnet, dass** die seitlichen Flächen (16) benachbarter Rippen (15) durch zugehörige konkave Streifen (18) verbunden sind und die Kerben (26) sich über die Streifen (18) erstrecken.

3. Riemenscheibe, wie beansprucht in einem der Ansprüche 1 oder 2, **dadurch gekennzeichnet, dass** die Kerben (26) gleichmäßig verteilt sind.

4. Riemenscheibe, wie beansprucht in einem der vorangehenden Ansprüche, **dadurch gekennzeichnet, dass** die Kerben (26) schräg geneigten Bahnen bezüglich der Rippen (15) folgen.

5. Riemenscheibe, wie beansprucht in Anspruch 4, **dadurch gekennzeichnet, dass** die Bahnen geradlinig sind und schief bezüglich der Achse (A).

6. Riemenscheibe, wie beansprucht in einem der vorangehenden Ansprüche, **dadurch gekennzeichnet, dass** die Kerben (26) mittels schräger Nuten (24) realisiert sind, wobei jede durch die Rippen (15) durchgehen.

7. Riemenscheibe, wie beansprucht in Anspruch 6, **dadurch gekennzeichnet, dass** diese axiale Stirnflächen (29) umfasst und dass sich die Nuten (24) zwischen den Flächen (29) axial erstrecken.

8. Riemenscheibe, wie beansprucht in einem der Ansprüche 1 bis 5, **dadurch gekennzeichnet, dass** die Vielzahl der Kerben (26) definiert ist durch eine Vielzahl von Blindvertiefungen.

9. Riemenscheibe, wie beansprucht in einem der vorangehenden Ansprüche, **dadurch gekennzeichnet, dass** die Riemenscheibe (8) zumindest einen Keilabschnitt (30) und zumindest einen abgeschrägten Abschnitt (31) umfasst, die jeweils zugewandt sind und eine der Kerben (26) definieren.

10. Riemenscheibe, wie beansprucht in Anspruch 9, **dadurch gekennzeichnet, dass** der zumindest eine Keilabschnitt (30) einer Rotationsrichtung der Riemenscheibe (8) zugewandt ist.

11. Riemenscheibenantrieb (1) umfassend zumindest eine erste und eine zweite Riemenscheibe (3, 8), die mit jeweiligen rotierenden Wellen (4, 9) fest verbunden sind und die jeweils eine Vielzahl von radial peripher umlaufenden Rippen (15) umfassen und einen Riemen (11), der unter Spannung zwischen der ersten und der zweiten Riemenscheibe (3, 8) gewickelt ist und umfassend einen Körper (13) aus elastischem Material, der mit einer V-förmig gerillten Oberfläche (15a) verbunden ist, die durch die Vielzahl von Rippen (15) definiert ist, **dadurch gekennzeichnet, dass** die zweite Riemenscheibe (8) eine Vielzahl von Kerben (26) aufweist, die umlaufend an den seitlichen Flächen (16) der Rippen (15) verteilt sind und jeweilige Erhebungen (27) eines Abschnitts des Körpers (13), die in Kontakt mit den Rippen (15) angeordnet sind, die Erhebungen (27) dehnen sich infolge der Einwirkung der Spannung des Riemens (11) elastisch innerhalb der Kerben (26) aus.

12. Riemenscheibenantrieb, wie beansprucht in Anspruch 11, **dadurch gekennzeichnet, dass** der Riemen (11) einen Körper (13) umfasst, der ein Filzgemisch aufweist, das in Kontakt mit der zweiten Riemenscheibe (8) ist.

## Revendications

1. Poulie (8) pour transmission par courroie (1) d'un véhicule comprenant un moyeu (12) tournant autour d'un axe (A) et pouvant être reliéé de façon rigide à un arbre rotatif (9) d'un accessoire (10) coopérant avec ladite transmission par courroie, une jante (14) solidaire dudit moyeu (12) et comportant une multitude de nervures (15) perpendiculaires de façon circonférentielle audit axe (A) et définissant une surface à rainures en V (15a) pouvant coopérer avec une courroie (11) de ladite transmission par courroie (1), **caractérisée en ce que** ladite poulie comporte une multitude d'encoches (26) réparties de façon circonférentielle sur les côtés latéraux (16) desdites nervures (15).

2. Poulie selon la revendication 1, **caractérisée en ce que** lesdits côtés (16) des nervures adjacentes (15) sont reliés par l'intermédiaire de bandes concaves respectives (18) et **en ce que** lesdites encoches (26) s' étendent au-dessus desdites bandes (18).

3. Poulie selon l'une quelconque des revendications 1 ou 2, **caractérisée en ce que** lesdites encoches (26) sont réparties uniformément.

4. Poulie selon l'une quelconque des revendications précédentes, **caractérisée en ce que** lesdites encoches (26) suivent des trajets disposés transversalement par rapport auxdites nervures (15).

5. Poulie selon la revendication 4, **caractérisée en ce que** lesdits trajets sont rectilignes et obliques par rapport audit axe (A).

6. Poulie selon l'une quelconque des revendications précédentes, **caractérisée en ce que** lesdites encoches (26) sont réalisées au moyen de rainures transversales (24) traversant chacune lesdites nervures (15).

7. Poulie selon la revendication 6, **caractérisée en ce qu'**elle comprend des faces (29) d'extrémités axiales et **en ce que** lesdites rainures (24) s' étendent axialement entre lesdites faces (29).

8. Poulie selon l'une quelconque des revendications 1 à 5, **caractérisée en ce que** ladite multitude d'encoches (26) est définie par une pluralité d'empreintes estampées.

9. Poulie selon l'une quelconque des revendications précédentes, **caractérisée en ce que** ladite poulie (8) comprend au moins une partie de coin (30) et au moins une partie -biseautée (31) opposées respectivement et définissant une desdites encoches (26).

10. Poulie selon la revendication 9, **caractérisée en ce que** ladite au moins une partie de coin (30) est orientée suivant un sens de rotation de ladite poulie (8).

11. Transmission par courroie (1) comprenant au moins une première et une seconde poulies (3, 8) reliées de façon rigide à des arbres rotatifs respectifs (4, 9) et comprenant respectivement une multitude de nervures circonférentielles radialement périphériques (15) et une courroie (11) enroulée sous tension entre ladite première et ladite seconde poulies (3, 8) et comprenant un corps (13) d'un matériau élastomère relié à une surface à rainures en V (15a) définie par ladite multitude de nervures (15), **caractérisée en ce que** ladite seconde poulie (8) comporte une multitude d'encoches (26) réparties de façon circonférentielle sur les côtés latéraux (16) desdites nervures (15) et logeant des reliefs respectifs (27) d'une partie dudit corps (13) en contact avec lesdites nervures (15), lesdits reliefs (27) étant dilatés élastiquement à l'intérieur desdites encoches (26) en raison de l'effet de la tension de ladite courroie (11).

12. Transmission par courroie selon la revendication 11, **caractérisée en ce que** ladite courroie (11) comprend un corps (13) comportant un mélange feutré en contact avec ladite seconde poulie (8).
